# EUROPÄISCHE PATENTSCHRIFT

(11) **EP 0 813 475 B1**
(45) Veröffentlichungstag und Bekanntmachung des Hinweises auf die Patenterteilung: **12.08.1998**
(21) Anmeldenummer: 96904781.0
(22) Anmeldetag: 14.02.1996
(51) Int. Cl.: B32B 31/00, B42D 15/10

(54) **VERFAHREN UND VORRICHTUNG ZUM ZUSAMMENFÜHREN UND VERBINDEN VON KUNSTSTOFFKARTEN UND BEDRUCKTEN KARTENTRÄGERN**
METHOD AND DEVICE FOR ASSEMBLING AND ATTACHING PLASTIC CARDS AND PRINTED CARD-CARRIERS
PROCEDE ET DISPOSITIF DE COUPLAGE ET D'ASSEMBLAGE DE CARTES EN PLASTIQUE ET DE POCHETTES IMPRIMEES

(30) Priorität: 08.03.1995 DE 19508283
(43) Veröffentlichungstag der Anmeldung: 29.12.1997
(73) Patentinhaber: BÖWE SYSTEC AG, 86159 Augsburg (DE)
(72) Erfinder: WEINMANN, Karlheinz, D-86919 Utting (DE); SCHMID, Eduard, D-86836 Untermeitingen (DE)
(74) Vertreter: Schoppe, Fritz, Dipl.-Ing.
(86) Internationale Anmeldenummer: EP9600639
(87) Internationale Veröffentlichungsnummer: WO9627498

(56) Entgegenhaltungen:
- WO-A-93/04433
- WO-A-94/21460
- US-A- 4 384 196
- US-A- 5 151 582

## Beschreibung

Die vorliegende Erfindung bezieht sich auf ein Verfahren und eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind.

Allgemein können mit bekannten Systemen Kunststoffkarten, wie z.B. dicke Kunststoffkarten vom Typ CR-80, mit Kartenträgern automatisch in variabler Stückzahl verbunden (appliziert) werden. Die mit Kunststoffkarten versehenen Kartenträger werden dann beispielsweise in einer Kuvertierstation in Kuverts verpackt und entweder geschuppt abgelegt oder einer weiteren Verarbeitung zugeführt, wie z.B. dem Sortieren oder Umreifen.

Bei einem bekannten Verfahren und einer bekannten Vorrichtung werden vorsortierte und personalisierte Kunststoffkarten auf vorsortierte und personalisierte Kartenträger aufgebracht. Hierbei bedeutet die Bezeichnung "personalisiert", daß die Kunststoffkarte bzw. der Kartenträger bereits mit den notwendigen Angaben, wie z.B. Name, Adresse etc., versehen ist. Die Kartenträger können hierbei aus einem Endlosstapel oder aus einem Einzelblattstapel zugeführt werden.

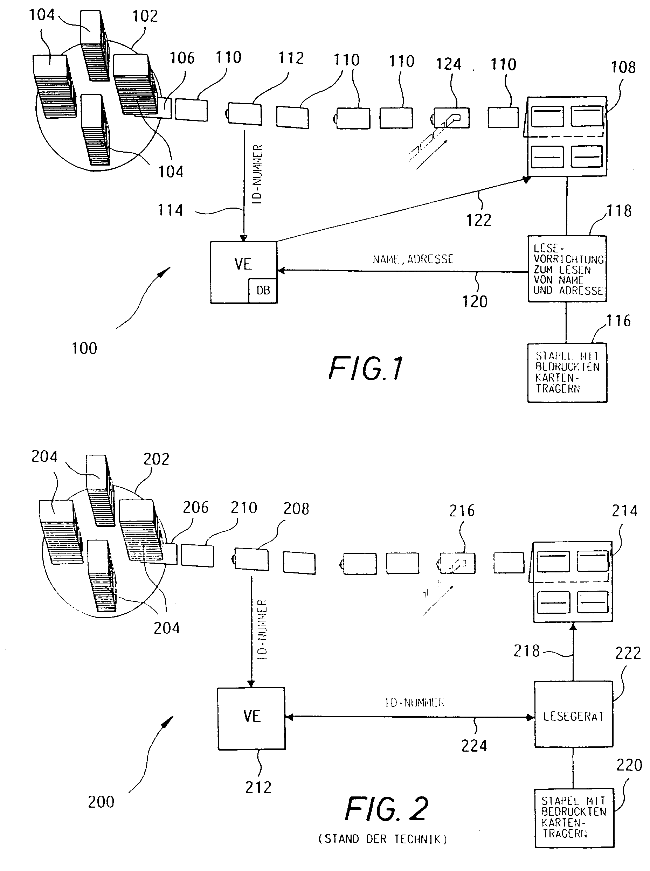

In Fig. 2 ist eine bekannte Vorrichtung zum Applizieren von Kunststoffkarten und Kartenträgern dargestellt. Die Vorrichtung ist in ihrer Gesamtheit mit dem Bezugszeichen 200 versehen.

Bei dieser bekannten Vorrichtung sind die Kunststoffkarten in einer Revolvereinrichtung 202 enthalten, die vier Magazine 204 einschließt. Aus der Revolvereinrichtung 202 werden einzelne Kunststoffkarten 206 ausgegeben, die einer Leseeinrichtung 208 zugeführt werden. Die Zuführung der einzelnen Karten zu den unterschiedlichen Stationen erfolgt über sogenannter Stoppstellen 210, an denen die Karten so lange verweilen, bis von einer nachfolgenden Station ein Signal erhalten wird, das anzeigt, daß die nachfolgende Station zur Aufnahme der Karte bereit ist.

In der Leseeinrichtung 208 wird eine Identifikationsnummer (ID-Nummer) der Kunststoffkarte 206 gelesen. Eine Verarbeitungseinrichtung 212 erfaßt und speichert diese. Anschließend wird die Kunststoffkarte 206 über eine Mehrzahl von Stoppstellen 210 zu einer Appliziereinrichtung 214 geleitet. Vor dem Zuführen der Kunststoffkarte 206 zu der Appliziereinrichtung 214 kann diese mit einem Klebeetikett an einer Station 216 versehen werden, um die nachfolgende Verbindung mit dem Kartenträger sicherzustellen.

Aus einer zweiten Richtung, die nicht der Zuführungsrichtung der Kunststoffkarte 206 zu der Appliziereinrichtung 214 entspricht, wird der Kartenträger zugeführt (Pfeil 218).

Der Kartenträger ist in einem Stapel 220 enthalten, der die Kartenträger in einer vorsortierten Form enthält. Die Kartenträger weisen bereits, wie es oben beschrieben wurde, die entsprechenden Daten, wie z. B. den Namen und die Adresse des Kartenempfängers, auf.

Aus dem Stapel 220 wird der Kartenträger einem Lesegerät 222 zugeführt, das eine auf dem Kartenträger aufgedruckte Identifikationsnummer liest. Diese Identifikationsnummer wird mit der Identifikationsnummer derjenigen Karte verglichen (Pfeil 224), die sich an der letzten Stoppstelle vor der Appliziereinrichtung 214 befindet. Stimmen die Identifikationsnummern überein, so erfolgt eine Verbindung der Kunststoffkarte und des Kartenträgers.

Bei dieser bekannten Vorrichtung 200 sind alle Komponenten durch den gleichen Systemtakt gesteuert. Das heißt, daß die Anzahl der Takte, die verstreichen, bis eine Kunststoffkarte nach der Erfassung der Identifikationsnummer bei 208 die Appliziereinrichtung 214 erreicht, bekannt ist, so daß abhängig von dieser bekannten Laufzeit die Zuführung der Kartenträger vom Stapel 220 und die Überprüfung der Identifikationsnummern derart gesteuert werden kann, daß der Kartenträger die Appliziereinrichtung 214 zum gleichen Zeitpunkt wie die zu diesem Kartenträger gehörige Kunststoffkarte 206 erreicht.

Ein Nachteil dieses bekannten Systems besteht darin, daß zum Zwecke der Zuordnung des jeweiligen Kartenträgers zu einer entsprechenden Kunststoffkarte es erforderlich ist, daß auf diesem Kartenträger die Identifikationsnummer aufgedruckt ist.

Im Gegensatz zur Kunststoffkarte, bei der die Identifikationsnummer und weitere persönliche Daten beispielsweise in einem Magnetstreifen gespeichert sind, also von außen nicht ohne weiteres erkennbar sind, sind diese weiteren persönlichen Daten auf dem bedruckten Kartenträger sichtbar aufgedruckt. Dies ist insbesondere in Anbetracht des erforderlichen Datenschutzes nachteilig.

Die WO 94/21460 bezieht sich auf Verfahren zur automatischen Herstellung von verifizierten Kartenpaketen. Auf Seite 5, vierter Absatz bis Seite 6, dritter Absatz ist ausgeführt, daß gemäß einem Verfahren dieses Dokumentes eine Karte mit maschinenlesbaren Indizes versehen wird. Die Karte wird anschließend mit Etiketten versehen, die Informationen hinsichtlich der Kartenaktivierung enthalten. Die Karten werden mit übereinstimmenden Trägern verbunden, die Informationen aufweisen, die mit den maschinenlesbaren Indizes übereinstimmen. Anschließend werden die mit den Karten verbundenen Kartenträger an den Kartenanwender versendet. Aus der Beschreibung dieses Dokumentes ergibt sich, daß die auf dem Träger angeordneten Informationen in Form eines Strichcodes vorliegen, der ausgelesen wird und mit den maschinenlesbaren Indizes auf der Karte verglichen wird.

Ausgehend von diesem Stand der Technik liegt der vorliegenden Erfindung die Aufgabe zugrunde, ein Verfahren und eine Vorrichtung zum Zusammenführen und Verbinden von Kunststoffkarten und bedruckten Kartenträgern dahingehend weiterzuentwickeln, daß ein ausreichender Datenschutz sichergestellt ist.

Die vorliegende Erfindung schafft ein Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit folgenden Schritten:
a) Bereitstellen der Kunststoffkarte und des bedruckten Kartenträgers;
b) Erfassen der Identifikationsmarkierung der Kunststoffkarte;
c) Auslesen von Daten aus einer Datenbank mittels der Identifikationsmarkierung;
d) Erfassen der Daten auf dem bedruckten Kartenträger vor dem Verbinden des Kartenträgers mit der Kunststoffkarte;
e) Bestimmen, ob die im Schritt d) erfaßten Daten auf dem Datenträger mit den im Schritt c) ausgelesenen Daten übereinstimmen; und
f) Falls die ausgelesenen Daten und erfaßten Daten übereinstimmen, Zusammenführen und Verbinden der Kunststoffkarte und des Kartenträgers.

Die vorliegende Erfindung schafft eine Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, mit folgenden Merkmalen:
- einer ersten Trägereinrichtung, die Kunststoffkarten enthält;
- einer ersten Erfassungseinrichtung zum Erfassen der Identifikationsmarkierung der Kunststoffkarte;
- einer Datenbankeinrichtung, aus der Daten mittels der Identifikationsmarkierung auslesbar sind;
- einer zweite Trägereinrichtung, die die bedruckten Kartenträger enthält;
- einer zweite Erfassungseinrichtung zum Erfassen von Daten auf dem bedruckten Kartenträger;
- einer Verarbeitungseinrichtung, die bestimmt, ob die anhand der Identifikationsmarkierung aus der Datenbank ausgelesenen Daten mit den erfaßten Daten auf dem Kartenträger übereinstimmen;
- einer Zusammenführ- und Verbindungseinrichtung, die die Kunststoffkarte und den Kartenträger zusammenführt und verbindet, falls die aus der Datenbank ausgelesenen Daten mit den erfaßten Daten des Kartenträgers übereinstimmen.

Bevorzugte Weiterbildungen der vorliegenden Erfindung sind in den Unteransprüchen definiert.

Ein bevorzugtes Ausführungsbeispiel der vorliegenden Erfindung wird nachfolgend unter Bezugnahme auf die beiliegenden Zeichnungen näher erläutert. Es zeigen:
- Fig. 1: eine Vorrichtung gemäß der vorliegenden Erfindung, die zur Ausführung des erfindungsgemäßen Verfahrens geeignet ist; und
- Fig. 2: eine Vorrichtung nach dem Stand der Technik, die ein Verfahren zum Zusammenführen und Verbinden von Kunststoffkarten und Kartenträgern nach dem Stand der Technik ausführt.

In Fig. 1 ist eine Vorrichtung zum Zusammenführen und Verbinden von Kunststoffkarten und bedruckten Kartenträgern dargestellt. Die Vorrichtung ist in ihrer Gesamtheit mit dem Bezugszeichen 100 bezeichnet.

Eine erste Trägereinrichtung 102, die hier als Revolver ausgeführt ist, umfaßt vier Magazine 104, die Kunststoffkarten 106 enthalten. Die Bewegung der Kunststoffkarten 106 von dem Revolver 102 zu einer Zusammenführ- und Verbindungseinrichtung 108, auch Appliziereinrichtung genannt, erfolgt auf eine in Fachkreisen an sich bekannte Art und Weise über sogenannte Stoppstellen 110. Das allgemeine Funktionsprinzip wurde bereits oben beschrieben.

Die Vorrichtung 100 weist eine erste Erfassungseinrichtung 112 auf, die eine Identifikationsnummer (ID-Nummer) der Kunststoffkarte 106 erfaßt. Diese Erfassung erfolgt beispielsweise durch Lesen eines Chips, eines Magnetstreifen oder eines Balkencodes. Die Art der Erfassung hängt davon ab, auf welche Art die Identifikationsnummer auf der Karte 108 angebracht ist.

Die erste Erfassungseinrichtung 112 ist über eine Datenleitung 114 mit einer Verarbeitungseinrichtung VE und einer Datenbankeinrichtung DB verbunden. Obwohl diese in diesem Ausführungsbeispiel als Einheit dargestellt sind, ist dies nicht unbedingt erforderlich, d.h. die Verarbeitungseinrichtung und die Datenbankeinrichtung können durchaus auch als Einzelgeräte ausgeführt sein.

In einer zweiten Trägereinrichtung 116, die auf irgendeine an sich bekannte Art und Weise ausgeführt sein kann, sind die bedruckten Kartenträger, die bereits die entsprechenden Daten, wie z.B. Name und Adresse enthalten, sortiert angeordnet. Nach der zweiten Trägereinrichtung 116 ist eine zweite Erfassungseinrichtung 118 angeordnet, die die auf dem Kartenträger aufgedruckten Daten erfaßt, beispielsweise per Video. Die zweite Erfassungseinrichtung 118 ist mit der Verarbeitungseinrichtung VE über eine Datenleitung 120 verbunden. Über diese Datenleitung werden die von der zweiten Erfassungseinrichtung 118 erfaßten Daten an die Verarbeitungseinrichtung VE übergeben.

Die Verarbeitungseinrichtung VE ist über eine weitere Datenleitung 122 mit der Appliziereinrichtung 108 verbunden.

Nachfolgend wird das erfindungsgemäße Verfahren beschrieben, das mittels der Vorrichtung 100 aus Fig. 1 ausgeführt wird.

Die in dem Revolver 102 bereitgestellten Kunststoffkarten werden zu der ersten Erfassungseinrichtung 112 bewegt. Dort wird deren Identifikationsnummer erfaßt und an die Datenbank DB übergeben, aus der mittels der Identifikationsmarkierung Daten ausgelesen werden, die dann in der Verarbeitungseinrichtung VE zur weiteren Verarbeitung gespeichert werden.

Aus der zweiten Trägereinrichtung 116 wird ein Kartenträger der Lesevorrichtung 118 zugeführt, die die auf dem Kartenträger enthaltenen Daten über die Datenleitung 120 an die Verarbeitungseinrichtung VE übergibt.

Die Verarbeitungseinrichtung VE bestimmt, ob die aus der Datenbank DB ausgelesenen Daten mit denjenigen Daten übereinstimmen, die über die Datenleitung 120 empfangen wurden.

Wenn dies der Fall ist, gibt die Verarbeitungseinrichtung über die Datenleitung 122 ein entsprechendes Signal an die Appliziereinrichtung 108, die dann die Kunststoffkarte 106 mit dem Kartenträger verbindet.

Nach dieser Verbindung erfolgt eine Weiterverarbeitung des Kartenträgers mit Kunststoffkarte auf eine in Fachkreisen an sich bekannte Art und Weise, z.B. Kuvertieren etc..

Die in Fig. 1 dargestellte Vorrichtung umfaßt ferner eine Etikettiereinrichtung 124, die auf der Kunststoffkarte vor dem Verbinden derselben mit dem Kartenträger ein Klebeetikett aufbringt.

## Patentansprüche

1. Verfahren zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch folgende Schritte:
a) Bereitstellen der Kunststoffkarte (106) und des bedruckten Kartenträgers;
b) Erfassen der Identifikationsmarkierung der Kunststoffkarte;
c) Auslesen von Daten aus einer Datenbank (DB) mittels der Identifikationsmarkierung;
d) Erfassen der Daten auf dem bedruckten Kartenträger vor dem Verbinden des Kartenträgers mit der Kunststoffkarte (106);
e) Bestimmen, ob die im Schritt d) erfaßten Daten auf dem Kartenträger mit den im Schritt c) ausgelesenen Daten übereinstimmen; und
f) Falls die ausgelesenen Daten und erfaßten Daten übereinstimmen, Zusammenführen und Verbinden der Kunststoffkarte (106) und des Kartenträgers.

2. Verfahren nach Anspruch 1, gekennzeichnet durch folgenden Schritt vor dem Schritt f)
- Aufbringen einer Klebeetikette auf der Kunststoffkarte (106).

3. Verfahren nach Anspruch 1 oder 2, dadurch gekennzeichnet,
daß die ausgelesenen Daten und die erfaßten Daten Namen und Adresse einer Person einschließen.

4. Vorrichtung zum Zusammenführen und Verbinden von Kunststoffkarten, die mit einer Identifikationsmarkierung versehen sind, und bedruckten Kartenträgern, die den jeweiligen Kunststoffkarten zugeordnet sind, gekennzeichnet durch
- eine erste Trägereinrichtung (102), die die Kunststoffkarten (106) enthält;
- eine erste Erfassungseinrichtung (112) zum Erfassen der Identifikationsmarkierung der Kunststoffkarte (106);
- eine Datenbankeinrichtung (DB), aus der Daten mittels der Identifikationsmarkierung auslesbar sind;
- eine zweite Trägereinrichtung (106), die die bedruckten Kartenträger enthält;
- eine zweite Erfassungseinrichtung (118) zum Erfassen von Daten auf dem bedruckten Kartenträger;
- eine Verarbeitungseinrichtung (VE), die bestimmt, ob die anhand der Identifikationsmarkierung aus der Datenbank (DB) ausgelesenen Daten mit den erfaßten Daten auf dem Kartenträger übereinstimmen; und
- eine Zusammenführ- und Verbindungseinrichtung (108), die die Kunststoffkarte (106) und den Kartenträger zusammenführt und verbindet, falls die aus der Datenbank (DB) ausgelesenen Daten mit den erfaßten Daten des Kartenträgers übereinstimmen.

5. Vorrichtung nach Anspruch 4, gekennzeichnet durch
eine Etikettiereinrichtung (124), die auf der Kunststoffkarte (106) ein Klebeetikett aufbringt.

6. Vorrichtung nach Anspruch 4 oder 5, dadurch gekennzeichnet,
daß die ausgelesenen Daten und die erfaßten Daten Namen und Adresse einer Person einschließen.

## Claims

1. A method of bringing together and joining plastic cards, which are provided with an identification mark, and printed card carriers associated with the respective plastic cards, characterized by the following steps:
a) providing the plastic card (106) and the printed card carrier;
b) detecting the identification mark of said plastic card;
c) reading data from a database (DB) by means of said identification mark;
d) detecting the data on said printed card carrier prior to joining said card carrier to the plastic card (106);
e) determining whether the data on the card carrier detected in step d) correspond to the data read in step c); and
f) provided that the data read and the data detected correspond, bringing together and joining the plastic card (106) and the card carrier.

2. A method according to claim 1, characterized by the following step carried out prior to step f)
- applying a gummed label to the plastic card (106).

3. A method according to claim 1 or 2, characterized in that
the data read and the data detected include the name and address of a person.

4. An apparatus for bringing together and joining plastic cards, which are provided with an identification mark, and printed card carriers associated with the respective plastic cards, characterized by
- a first carrier means (102) containing the plastic cards (106);
- a first detection means (112) for detecting the identification mark of the plastic card (106);
- a database means (DB) from which data can be read by means of said identification mark;
- a second carrier means (106) containng the printed card carriers;
- a second detection means (118) for detecting data on said printed card carrier;
- a processing means (VE) which determines whether the data read from the database (DB) by means of the identification mark correspond to the data detected on the card carrier; and
- a bringing-together and joining means (108) used for bringing together and joining the plastic card (106) and the card carrier, provided that the data read from the database (DB) correspond to the data detected on the card carrier.

5. An apparatus according to claim 4, characterized by
a labeller (124) which applies a gummed label to the plastic card (106).

6. An apparatus according to claim 4 or 5, characterized in
that the data read and the data detected include the name and address of a person.

## Revendications

1. Procédé de couplage et d'assemblage de cartes en plastique pourvues d'un marquage d'identification et de pochettes imprimées associées aux cartes en plastique concernées, caractérisé par les étapes suivantes consistant à :
a) préparer la carte en plastique (106) et la pochette imprimée,
b) saisir le marquage d'identification de la carte en plastique,
c)lire des données d'une banque de données (DB) à l'aide du marquage d'identification,
d) saisir les données sur la pochette imprimée, avant l'assemblage de la pochette avec la carte en plastique (106),
e) déterminer si les données sur la pochette, saisies à l'étape d), coïncident avec les données lues à l' étape c), et
f) si les données lues et les données saisies coïncident, coupler et assembler la carte en plastique (106) et la pochette.

2. Procédé suivant la revendication 1, caractérisé par l'étape suivante, avant l'étape f), consistant à :
- appliquer une étiquette adhésive sur la carte en plastique (106).

3. Procédé suivant la revendication 1 ou 2, caractérisé par le fait que les données lues et les données saisies comprennent le nom et l'adresse d'une personne.

4. Dispositif de couplage et d'assemblage de cartes en plastique pourvues d'un marquage d'identification et de pochettes imprimées associées aux cartes en plastique concernées, caractérisé par :
- un premier dispositif porteur (102) contenant les cartes en plastique (106)
- un premier dispositif de saisie (112) destiné à la saisie du marquage d'identification de la carte en plastique (106),
- un dispositif de banque de données (DB) duquel peuvent être lues des données à l'aide du marquage d'identification,
- un second dispositif porteur (106) contenant les pochettes imprimées,
- un second dispositif de saisie (118) destiné à la saisie de données sur la pochette imprimée,
- un dispositif de traitement (VE) qui détermine si les données lues de la banque de données (DB) sur base du marquage d'identification coïncident avec les données saisies sur la pochette,
- un dispositif de couplage et d'assemblage (108) qui couple et assemble la carte en plastique (106) et la pochette si les données lues de la banque de données (DB) coïncident avec les données saisies de la pochette.

5. Dispositif suivant la revendication 4, caractérisé par un dispositif d'étiquetage (124) qui appose une étiquette adhésive sur la carte en plastique (106).

6. Dispositif suivant la revendication 4 ou 5, caractérisé par le fait que les données lues et les données saisies comprennent le nom et l'adresse d'une personne.
